# EUROPEAN PATENT APPLICATION

(11) **EP 4 506 963 A2**
(43) Date of publication of application: **12.02.2025**
(21) Application number: 24193187.2
(22) Date of filing: 06.08.2024
(51) Int. Cl.: G21G 1/06, G21G 4/02

(54) **DEVICE FOR GENERATING ENERGY BY NUCLEAR REACTIONS WITH CONTROLLED CREATION OF FREE NEUTRONS**

(30) Priority: 09.08.2023 DE 102023121174
(71) Applicant: Sangle-Ferriere, Bruno, 75016 Paris (FR)
(72) Inventor: Sangle-Ferriere, Bruno, 75016 Paris (FR)
(74) Representative: Cabinet Nony

(57) **Abstract**

The invention relates to a device (1) for carrying out nuclear reactions comprising:
- a source material comprising a first isotope, arranged in a first enclosure,
- an ionization system (100) configured for ionizing the source material,
- an ion accelerator configured for accelerating ions of the source material to a first target (103) arranged in a second enclosure (102) and comprising a second isotope, so as to allow a first nuclear reaction between the first and the second isotopes,
- a second target (110) arranged either in the second or in a third enclosure (109), so as to allow reaction of neutrons resulting from the first nuclear reaction with atomic nuclei of the second target,
the first isotope being a hydrogen isotope and the second isotope being a hydrogen isotope or a heavy isotope.

## Description

### Technical field

The present invention relates to the carrying out of nuclear reactions caused by the impact of an ion beam on a first target, generating neutrons fusing with a second target, and then recovery, in particular electrical, of the energy produced by these nuclear reactions.

It relates more particularly to the carrying out of said reactions producing neutrons starting from hydrogen isotopes, in particular the fusion of two deuterium nuclei and the fusion of a deuterium nucleus with a tritium nucleus, but also spallation caused by projecting a hydrogen isotope, in particular protium, at a velocity greater than 0.5GeV onto a heavy isotope, in particular of mercury or tungsten.

The invention may also be used for producing tritium.

"Nuclear fusion" means, in the context of the invention, a process by which two atomic nuclei join together to form a heavier nucleus. This differs in particular from spallation, in which the nucleus struck by an incident particle decomposes as a result of the impact. "Nuclear reaction" means a process by which the composition of a nucleus changes, for example by fusion, by fission, by spallation or by absorption of a neutron.

"Heavy isotope" means, in the context of the invention, an isotope of an element having a density greater than or equal to 12 g/cm³ in a liquid or solid form.

### Prior art

At present, atomic energy is mostly produced by reactions of nuclear fission that lead to the creation of many unstable isotopes having half-lives that may be very considerable. Moreover, reactors for nuclear fission often require a considerable time, for example several days, to be stopped. During this time for shut-down, cooling may be necessary to prevent the fission products, which are still very active, from triggering chain reactions. Nuclear fusion is currently used in particular in the context of atomic weapons, combined in this case with reactions of nuclear fission, and requires very high temperatures and pressures for the collision of atomic nuclei to cause fusion of these nuclei.

The application of controlled reactions of nuclear fusion is therefore difficult. Now, nuclear fusion represents a potentially clean and abundant source of energy.

Causing the fusion of deuterium nuclei by subjecting them to a high voltage, of the order of 40 kV, in a vacuum chamber, is known. However, this method does not allow recovery of the energy generated by the fusion of the isotopes, or even less of the neutrons with the elements that absorb them.

Application EP 2561514 A1 discloses a hybrid reactor, i.e. a nuclear fission reactor driven by a particle accelerator. According to the method described in that application, a proton flux is directed towards a target to cause spallation of nuclei of the target and thus produce neutrons for controlling the activity of the core of the nuclear reactor. Although this application relates to the use of accelerated particles for causing the spallation of nuclei, it does not disclose a nuclear fusion process.

There is therefore a need to propose a device for carrying out nuclear reactions that allows recovery of the energy released by these reactions and does not require subjecting the reactants to conditions of high temperature and high pressure. There is also a need to propose a device for generating tritium.

The aim of the invention is to respond to these needs at least partially.

### Disclosure of the invention

For this purpose, according to one of its aspects, the invention relates to a device for carrying out nuclear reactions, comprising:
- a source material comprising a first isotope, arranged in a first enclosure,
- an ionization system configured for ionizing the source material at least partially,
- an ion accelerator configured for accelerating ions derived from the source material towards a first target arranged in a second enclosure and comprising a second isotope, so as to allow a first nuclear reaction between the first isotope and the second isotope,
- a second target arranged either in the second enclosure or in a third enclosure separate from the second enclosure, so as to allow reaction of neutrons resulting from the first nuclear reaction with atomic nuclei of the second target,

the first isotope being a hydrogen isotope and the second isotope being a hydrogen isotope or a heavy isotope,
the first nuclear reaction being a spallation reaction if the second isotope is a heavy isotope and a fusion reaction if the second isotope is a hydrogen isotope.

If the second isotope is a heavy isotope, it is selected in such a way that its nuclear reaction with the first isotope produces one or more neutrons. The heavy isotope may in particular be selected from the isotopes listed in Table 1, in particular xenon 132, mercury 202, tantalum 181, lead 208, platinum 194, 195 or 196, iridium 193, osmium 190, tungsten 184 or 186, hafnium 178 or 180, ytterbium 174, erbium 168, dysprosium 162 or 164 or barium 138.

**[Table 1]**

| Element | Z | N | Isotope |
|---|---|---|---|
| Titanium | 22 | 26 | Titanium 48 |
| Iron | 26 | 30 | Iron 56 |
| Nickel | 28 | 32 | Nickel 60 |
| Copper | 29 | 36 | Copper 65 |
| Zinc | 30 | 36 | Zinc 66 |
| Germanium | 32 | 42 | Germanium 74 |
| Krypton | 36 | 48 | Krypton 84 |
| Strontium | 38 | 50 | Strontium 88 |
| Ruthenium | 44 | 58 | Ruthenium 102 |
| Palladium | 46 | 60 | Palladium 106 |
| Tin | 50 | 70 | Tin 120 |
| Xenon | 54 | 78 | Xenon 132 |
| Barium | 56 | 82 | Barium 138 |
| Dysprosium | 66 | 98 | Dysprosium 164 |
| Dysprosium | 66 | 98 | Dysprosium 164 |
| Dysprosium | 66 | 96 | Dysprosium 162 |
| Erbium | 68 | 100 | Erbium 168 |
| Ytterbium | 70 | 104 | Ytterbium 174 |
| Hafnium | 72 | 106 | Hafnium 178 |
| Hafnium | 72 | 108 | Hafnium 180 |
| Tantalum | 73 | 108 | Tantalum 181 |
| Tungsten | 74 | 110 | Tungsten 184 |
| Tungsten | 74 | 112 | Tungsten 186 |
| Osmium | 76 | 114 | Osmium 190 |
| Iridium | 77 | 116 | Iridium 193 |
| Platinum | 78 | 116 | Platinum 194 |
| Platinum | 78 | 117 | Platinum 195 |
| Platinum | 78 | 118 | Platinum 196 |
| Mercury | 80 | 122 | Mercury 202 |
| Lead | 82 | 126 | Lead 208 |

Thus, according to a variant of the invention, the device according to the invention makes it possible to ionize a first hydrogen isotope and accelerate the ions generated towards a second hydrogen isotope constituting a first target, so as to obtain reactions of nuclear fusion between the first and second isotopes. This fusion generates free neutrons according to one of the following reactions, where D represents deuterium, T tritium, n a neutron, and eV energy in electron-volts, released in particular in the form of kinetic energy of the neutron:

D + D → n + ³He + 3.30 MeV,

or

D + T → n + ⁴He + 14.1 MeV.

According to a second variant of the invention, the device according to the invention makes it possible to ionize a first hydrogen isotope, for example protium, and accelerate the ions generated towards a heavy isotope, for example mercury or tungsten constituting a first target, so as to obtain spallation of the neutrons of the target isotope. Each nucleus of the first isotope advantageously allows several neutrons to be released from the heavy isotope.

The neutrons generated by the first nuclear reaction and optionally slowed down cause a second nuclear reaction with a second target. The second target may advantageously consist of an isotope of hydrogen or of many other elements, in particular boron 10, helium 3, lithium 6, nickel 58, nickel 60, tungsten 182, boric oxide B₂O₃ with a boiling point of 1860°C and chemically stable, sodium tetraborate Na₂B₄O₇ with a melting point of 700°C and chemically stable, boron nitride BN with a melting point of 2967°C, B being boron 10. The second target may act as a moderator or may be separate from the moderator. However, in the latter case the moderator will undergo nuclear reaction with the neutrons just like the target material but in smaller proportions, especially if the material constituting the second target has an absorption cross-section greater than the moderator.

If the target material is separate from the moderator, the latter is advantageously dispersed within it, for example in the form of beads, or in the form of a mixture, to take advantage of the neutrons that are slowed down therein, but also at the periphery of the second or third enclosure to capture the slow neutrons circulating there and prevent them escaping from said enclosure. Alternatively, the neutrons generated by the first nuclear reaction are slowed down in a moderator arranged in or around the second enclosure.

### Moderator

The moderator advantageously comprises elements of low atomic number and of high elastic effective cross-section, being in particular di-protium, helium 4, argon 36, methane, water, polystyrene with boiling point of 806°C, calcium hydride CaH₂ with melting point of 816°C, sodium hydroxide NaOH with boiling point of 1388°C and chemically stable, potassium hydroxide KOH with boiling point of 1327°C and chemically stable. These elements may be in the gaseous state, preferably under pressure, in liquid or solid form or in the supercritical state.

Alternatively or in combination, the second target is mixed with a moderator or acts as moderator. The second target may thus be mixed in particular with helium 4, argon 36, methane, water, polystyrene, calcium hydride CaH₂, sodium hydroxide NaOH, potassium hydroxide KOH, or it may advantageously consist of helium 3, heavy methane CD₄, heavy water D₂O, heavy polystyrene (C₈D₈)ₙ, heavy calcium hydride CaD₂, heavy sodium hydroxide NaOD, heavy potassium hydroxide KOD, dihydrogen borate H₂BO₃, heavy dihydrogen borate D₂BO₃, decaborane B₁₀H₁₄, heavy decaborane B₁₀D₁₄, heavy calcium hydride CaD₂, or else hydrogenated compounds as mentioned above, with certain hydrogen atoms replaced with atoms of deuterium or tritium.

Alternatively, the device does not contain a moderator, the target material then preferably being contained in an enclosure with a thickness between 1 metre and 70 metres.

### Target material

The target material selected is preferably an element whose reaction product with a neutron is stable, in nuclear respects, with a large neutron absorption cross-section, which is abundant and preferably can be separated easily from the other isotopes of the same element with a smaller absorption cross-section. The target material is for example helium 3, boron 10, lithium 6, calcium 40, tungsten 183, xenon 130 or 131, platinum 196, mercury 201, titanium 148, cadmium 111, iron 56, nickel 58, 60 or 62, sulphur 32, sodium 23, zinc 64, 66 or 68 or nitrogen 14. The preferred target material may be mixed with other target materials, preferably selected so that their product of fusion with a neutron is stable.

The energy produced may be recovered in thermal, chemical, or electrical form.

In a preferred embodiment, the device according to the invention is used for generating electricity, some of which is used for accelerating the ions of the target material.

According to an advantageous variant, the device also serves for generating tritium. Tritium is an unstable isotope of hydrogen, but advantageously allows very high-energy fusion reactions, in particular with protium, and is able to participate in the first nuclear reaction of a device described in this patent.

Tritium may for example be generated by one of the following reactions:

¹⁴N +n → ¹²C +T

⁶Li + n → ⁴He + T

n + D → T

The device according to the invention may further comprise one or more of the following optional features:
- The ionization system comprises a laser and an input waveguide configured for guiding the light emitted by the laser towards an optical input of the first enclosure, the optical input being configured to allow illumination of the source material by the emitted light.
- The ionization system comprises an X-ray emission system arranged in the first enclosure so as to ionize the source material at least partially.
- The ion accelerator comprises a high-voltage generator, connected electrically to a first electrode and to a second electrode, the first and second electrodes being arranged in the second enclosure, the generator and the first and second electrodes being configured to generate an electric field for accelerating ions from the source material towards the first target so as to cause fusion of the atomic nuclei of the ions from the source material with atomic nuclei of the first target.
- At least the first and/or the second enclosure is/are surrounded by a wall comprising a material that absorbs gamma rays, such as tungsten or lead.
- The second target is arranged in the third enclosure, the third enclosure being arranged around the second enclosure.
- The device comprises a cooling circuit where the cooling fluid circulates at least partly in the walls of the second enclosure and/or in the walls of the third enclosure.
- The device comprises a system for recovery of the thermal energy released by the slowing of the ions accelerated onto the first target and/or by the first nuclear reaction and/or by the slowing of the neutrons and/or by the reaction of fusion of the neutrons with the second target. The energy recovery system comprises for example a gas under pressure in an enclosure arranged so as to recover at least part of the heat released in order to increase the pressure of the gas. The enclosure may comprise a valve allowing expansion of the gas to cause rotation of a turbine producing electricity. The energy recovery system may comprise, alternatively or in combination, a chemical reactor arranged so as to recover at least part of the heat released, and in which endothermic chemical reactions take place, for example making it possible, as described hereunder, to form dihydrogen or to supply an electric cell or a fuel cell.
- The device comprises a material that absorbs gamma rays, arranged either in the third enclosure, or around the third enclosure so that it absorbs a fraction of the gamma rays produced in the third enclosure greater than 50%, greater than 80%, greater than 90% or greater than 99%.
- The first isotope and the second isotope are selected from deuterium and tritium, only one of which may be tritium.
- The device comprises one or more coils surrounding the beam of accelerated ions, acting as magnetic lenses for concentrating the ion beam or keeping it concentrated.
- The first isotope is deuterium in gaseous form, the deuterium circulating in a circuit comprising the first enclosure, the circuit being configured to cool the deuterium.
- The second target comprises, preferably consists of, lithium 6.
- The first enclosure preferably comprises a gas inlet and a gas outlet configured to allow circulation of the first isotope in the first enclosure.
- The internal wall of the first enclosure is covered at least partially with a dielectric material.
- The internal wall of the second enclosure is preferably covered at least partially with a dielectric material.
- The walls of the second enclosure and/or the walls of the third enclosure are traversed by a liquid coolant or by liquid coolants.

The invention also relates to, but is not limited to:
- the use of the device according to the invention as a chemical reactor for heating a chemical product allowing a chemical reaction, in particular endothermic, with or without catalyst. Said chemical product preferably circulates in the walls of the second and/or third enclosure to ensure cooling thereof, and/or in the enclosures themselves. The chemical product is then in particular heated by thermal transport of the heat produced by the slowing of the ions but also by absorption of the gamma rays from the nuclear reactions; and if it is located in the third enclosure or in the wall of the second enclosure, by the slowing of the neutrons that are released from said second enclosure, with which it reacts, preferably also by nuclear reaction;
- the use of the device according to the invention for producing hydrogen by thermolysis, in particular starting from the sulphur-iodine cycle, the sulphur-iodine cycle being supplied with the heat recovered by the heat-conducting material or for example by a similar cycle in which iodine is replaced with another halogen such as bromine or chlorine;

- the use of the device for producing electricity;
- the use of the device for heating water or steam;
- the use of the device for regeneration of zinc dioxide to zinc and oxygen;
- the use of the device for supplying heat to a device for producing electricity by regeneration of electrodes and/or supporters of combustion and/or fuels and/or electrolytes in particular as described in the patent application filed on 7 October 2021 under number FR 2110637 with the title **"Fuel cell system"**; none or at least one of the endothermic chemical reactions necessary for said processes taking place at least partly in one of the enclosures or in one of the cooling circuits of the nuclear device.

If the liquid coolant is the site of nuclear reactions, especially if it circulates in the wall of the second enclosure or in the third enclosure, the device preferably comprises a mechanism such as a valve allowing evacuation of the gaseous elements newly created or created by the possible degradation of unstable isotopes that appeared after fusion of the liquid coolant with the neutrons.

### Brief description of the drawings

[Fig. 1] Fig. 1 shows a first embodiment of a device according to the invention.
[Fig. 2] Fig. 2 shows a second embodiment of a device according to the invention.
[Fig. 3] Fig. 3 shows a third embodiment of a device according to the invention.
[Fig. 4] Fig. 4 shows an assembly comprising an ionization system and an ion accelerator.
[Fig. 5] Fig. 5 is a detail view of the assembly in Fig. 4.

### Detailed description

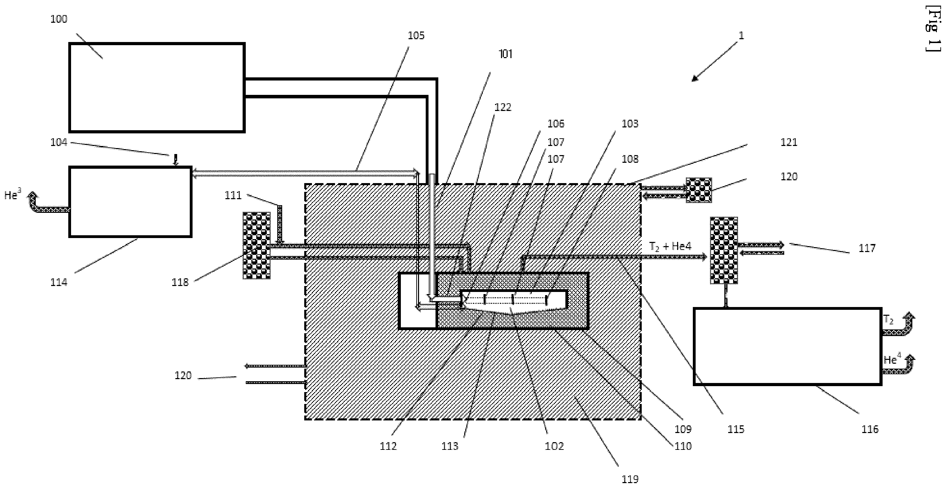

Fig. 1 shows a device 1 according to the invention configured for producing tritium at moderate temperature, i.e. at a temperature between 200°C and 400°C.

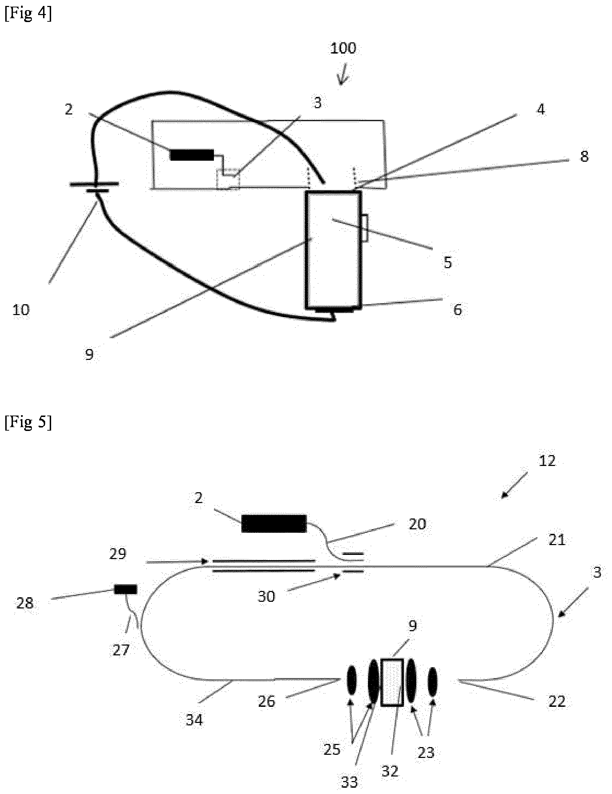

The device 1 comprises an assembly 100 of an ionization system and an ion accelerator, which is shown in detail in Fig. 4. The assembly 100 allows the production and acceleration of ions of a first hydrogen isotope, which is deuterium in this example.

The ions of the first isotope are injected in a supply channel 101 that leads to the second enclosure 102 containing the first target 103. The channel 101 is advantageously angled to reach the second enclosure 102, the trajectory of the ions being curved under the effect of a magnetic field produced by a magnet or a coil, not shown, to follow the curve in the channel. The supply channel, for its part, contained in the enclosure for absorption of neutrons 109, is of helicoidal shape (not shown), rotation of the ions being provided by the presence of a magnetic field generated by a solenoid 122 surrounding said channel in this part.

The first target 103 in this embodiment is deuterium in gaseous form. The gaseous deuterium may be introduced into the second enclosure from a source 104 via a channel 105. Advantageously, the channel 105 is also of helicoidal shape (not shown) for its part contained in the enclosure 109.

The second enclosure 102 is arranged in a third enclosure 109. The third enclosure 109 contains a second target 110, which in this embodiment is lithium 6 in the liquid state. The lithium 6 may be introduced into the third enclosure via the channel 111. Preferably, an intermediate enclosure is arranged around the second enclosure 102, in the third enclosure 109. This intermediate enclosure contains a moderator, preferably liquid water or water in the supercritical state, argon 36 or supercritical dihydrogen. The thickness of the moderator in the intermediate enclosure is advantageously between 5 cm and 20 cm, the thickness of lithium 6 in the third enclosure then advantageously being between 1 cm and 2 cm. The use of an intermediate enclosure containing a moderator makes it possible to reduce the necessary volume of lithium 6 considerably.

Advantageously, the intermediate enclosure is cooled.

Preferably, a membrane 106, permeable to the ions of the first isotope but impermeable to the first target contained in the second enclosure 102, is arranged at the ion inlet of the second enclosure 102. The membrane 106 consists for example of six layers of graphene, of graphane, or of hexagonal boron nitride, in such a way that the first target 103 causes little or no retardation of the ions during their acceleration or their transport by the devices 100 and 101.

More preferably, the walls 113 of the second enclosure 102 comprise a heat-resistant material with little absorption of neutrons, such as iron or an iron alloy, and are covered with a dielectric material such as glass, in such a way that electrons are not stripped from the wall by the deuterium ions originating from the device 101.

Advantageously, one or more electrodes 107 including a cathode 108 are arranged in the second enclosure so as to accelerate the ions of the first isotope, in particular to compensate for the force of friction of these ions in the first target material by the Bragg effect. These electrodes, other than the cathode 108, are preferably covered with a dielectric material such as mica or silicon dioxide, preventing electrons being stripped from them. In the context of the invention, these electrodes are called maintenance electrodes.

The device is configured so that the ions of the first isotope have a sufficient velocity, in the second enclosure 102, to cause reactions of nuclear fusion with the first target 103. The deuterium ions preferably have an energy between 30 MeV and 80 MeV, for example 50MeV if there is no maintenance electrode, or between 750KeV and 15MeV if there are maintenance electrodes; for example 10 MeV.

The fusion of two deuterium nuclei generates helium 3 ³He and a neutron.

The energy generated by the first fusion reaction appears in the form of kinetic energy of the reaction products, i.e. neutrons and helium. This kinetic energy and in particular that of the helium contributes, together with the heating of the first target gas by the Bragg effect due to transport of the ions in the gas, to considerable heating of the first target gas contained in the second enclosure.

The kinetic energy of helium 3 contributes to heating of the gaseous deuterium of the first target.

The neutrons produced by the first fusion reaction have a high velocity directed substantially in the direction of the deuterium ion beam. Thus, the neutrons generated advantageously do not enter the channel 105 once they are generated. They may, however, enter it as a result of their rebound on the nuclei of the first and second target elements. Advantageously, the lithium 6 contained in the third enclosure 109 makes it possible to moderate the temperature within the second enclosure 102.

The helium 3 generated may be separated from the gaseous deuterium by a separator 114, known per se. The separator 114 may for example operate by oxidation of the deuterium to form heavy water, electrolysed thereafter to produce di-deuterium. Furthermore, the separator 114 is also arranged for cooling or collecting the heat from the deuterium/helium 3 mixture.

The neutrons generated by the first nuclear fusion reaction are slowed down in particular in the moderator and then react with lithium 6 nuclei and thus form helium 4 ⁴He and tritium in the gaseous state. As lithium 6 has a high boiling point, several sub-compartments may be arranged in the third enclosure 109 and cooled to different temperatures.

Preferably, a gas deflector 112 is arranged under the enclosure containing the moderator to prevent accumulation of tritium and helium 4, which may circulate in the liquid lithium 6.

Helium 4 and gaseous tritium may be withdrawn from the third enclosure 109 via channel 115. The channel 115 conveys the gas mixture to a second separator 116, configured for separating helium 4 from tritium, for example by oxidation of tritium. Preferably, the channel 115 conveys the gas mixture to a cooling circuit 117 configured for cooling the gas mixture prior to introduction into the second separator 116.

More preferably, the third enclosure 109 is configured so as to limit the accumulation of gas in an upper part of the third enclosure. The top of the enclosure may for example have the shape of an inverted funnel (not shown), from the top of which the gas mixture of tritium and helium 4 goes to the pipeline 115.

Advantageously, the lithium 6 may be cooled by circulation in the lithium cooling circuit 118.

During operation of the device, the temperature of the lithium 6 is advantageously maintained between 200°C and 400°C. A temperature controller or a fuse (not shown) may advantageously be inserted to stop electrical acceleration of the ions if the temperature of the lithium approaches its boiling point.

Preferably, the third enclosure 109 is arranged in a fourth enclosure 119 containing lead. Lead is able to absorb the gamma radiation produced in the third enclosure. The lead is preferably maintained at a temperature of about 400°C, in the liquid state. It can then circulate in the lead cooling circuit 120, which allows its heat to be recovered. This makes it possible to produce energy, for example electrical by means of a steam turbine, some of the electricity being used to supply energy to the ion generator and accelerator. Alternatively, the device is configured so that the lead remains solid. Channels for circulation may then be arranged in the lead, in which a heat-transfer fluid circulates. The walls of the enclosures 109 and 121 are for example made of stainless steel.

The walls 121 of the fourth enclosure 119 advantageously comprise thermal protection reflecting the heat, i.e. the infrared radiation. This protection consists for example of Bragg mirrors, such as a device known by the name "hot mirror". The walls 121 may also contain one or more plates of neutron absorbing material such as boron 10, for example a plate of boron 10 with a thickness of 3 cm, which can absorb the neutrons that were not absorbed by the lithium 6.

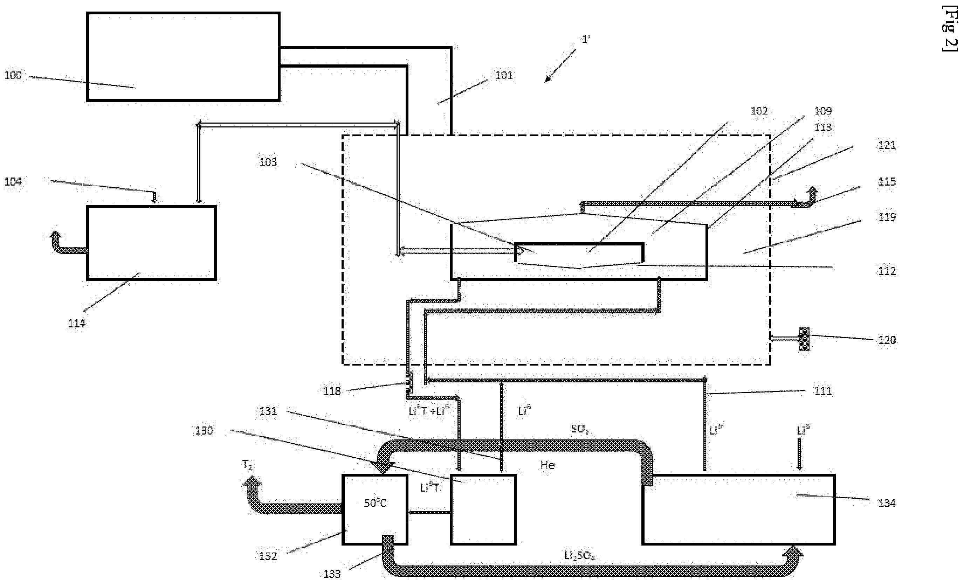

Fig. 2 illustrates a second embodiment of a device 1' according to the invention, configured for producing tritium at high temperature, i.e. at a temperature above 1000°C, for example 1100°C. The device 1' in Fig. 2 differs from the device 1 in Fig. 1 in particular by its manner of producing electricity from heat.

The device 1' is partly configured like the device 1 shown in Fig. 1. For clarity, the same elements are identified with the same reference numbers.

Thus, as in the embodiment shown in Fig. 1, the device 1' comprises an assembly 100 comprising an ionization system and an ion accelerator. The first isotope, which is ionized by the ionization system, is deuterium.

The deuterium ions are conveyed via a supply channel 101 to the second enclosure 102 containing the first target 103. The supply channel 101, for its part comprised in the neutron absorption enclosure 109, is advantageously of helicoidal shape (not shown), rotation of the ions being provided by the presence of a magnetic field generated by a solenoid. This helicoidal shape allows the neutrons penetrating into the vacuum of the channel only to travel there for no more than a portion of the helix, whereas some neutrons could pass through the whole channel if the latter were rectilinear, and thus escape from the device. In this embodiment the first target 103 is deuterium in gaseous form. The gaseous deuterium may be introduced into the second enclosure from a source 104 via the channels 105. The channel 105 is advantageously also of helicoidal shape (not shown) for the part thereof contained in the enclosure 109.

The second enclosure 102 is arranged in a third enclosure 109. The third enclosure 109 contains a second target 110, which comprises lithium 6 in the liquid state. The lithium 6 may be introduced into the third enclosure 109 via the channel 111.

If an intermediate enclosure between the second and third enclosures is used, a moderator may be introduced there, such as water, dihydrogen or argon 36 at a supercritical pressure, lithium 6 being introduced into the third enclosure.

The device is configured so that the ions of the first isotope have a sufficient velocity, in the second enclosure 102, to cause reactions of nuclear fusion with the first target 103. The deuterium ions may for example have an energy between 30 MeV and 50 MeV.

The fusion of two deuterium nuclei generates helium 3 and a neutron.

The neutrons produced by the first fusion reaction have a high velocity directed substantially in the direction of the deuterium ion beam.

The helium 3 generated may be separated from the gaseous deuterium by the separator 114.

The neutrons generated by the first nuclear fusion reaction have a sufficient kinetic energy for reacting with lithium 6 nuclei and thus forming helium 4 ⁴He and tritium in the gaseous state.

Advantageously, the device is configured so that, during operation, the lithium 6 reaches a temperature above 600°C, allowing the tritium to react with the lithium, for example 1100°C. Furthermore, a small amount of carbon, for example between 10 ppm and 50 ppm, preferably 20 ppm, may be introduced into the lithium 6. Thus, the temperature of the lithium 6 being elevated and the carbon acting as a catalyst, the tritium can react chemically with the lithium to form LiT.

The gaseous helium 4 may be withdrawn from the third enclosure 109 via the channel 115, arranged in the upper part of the enclosure 109.

Advantageously, the lithium 6 can be cooled by circulation in the lithium cooling circuit 118.

Once cooled, the mixture of LiT and ⁶Li is decanted in the decanter 130. In fact, LiT is more dense than liquid lithium 6. It is therefore possible to separate LiT and lithium 6. Advantageously, the decanter 130 may be replaced with a centrifuge configured for separating LiT and lithium 6 by centrifugation.

Alternatively, separation may be carried out at a temperature greater than or equal to 1100°C: LiT is gaseous whereas lithium 6 is liquid, separation can therefore be carried out by gas evolution.

The lithium 6 collected may then be reinjected into the third enclosure 109 via the channel 131.

The LiT collected is injected into a reactor 132 containing sulphur dioxide. LiT reacts with the latter to form lithium sulphate Li₂SO₄ and di-tritium.

The tritium may then be withdrawn from the device.

The lithium sulphate is advantageously injected via channel 133 into an electrolyser 134. Electrolysis allows the sulphur dioxide to be separated from the lithium 6, which may be reinjected into the third enclosure 109.

Preferably, the third enclosure 109 is arranged in a fourth enclosure 119 containing lead, with a boiling point of 1749°C. Preferably, the walls of the fourth enclosure 119 are formed from a metal that remains in the solid state at the temperatures of the lead and of the lithium in the device, for example stainless steel containing 16% of chromium or tungsten. The lead can absorb the gamma radiation produced in the third enclosure. When heated sufficiently, lead turns liquid. It can then circulate in the lead cooling circuit 120, allowing the heat to be recovered from it. Alternatively, the device is configured so that the lead remains solid. Channels for circulation may then be arranged in the lead, in which a heat-transfer fluid circulates.

The walls 121 of the fourth enclosure 119 advantageously comprise thermal protection reflecting the heat.

The devices for heat recovery and for cooling are advantageously devices allowing conversion of the latter into electricity, as described in the patent application filed on 7 October 2021 under number FR 2110637 with the title **"Fuel cell system".** The methods of conversion using heat at 1100°C or less may then be used, in particular:
- using a zinc-air battery with regeneration of zinc from zinc oxide by hydrogenation at 1100°C, which can have a conversion efficiency close to 89%,
- using a zinc-air battery with regeneration of zinc from zinc oxide by oxidation with carbon monoxide at 880°C, which can have a conversion efficiency close to 100%.
- or using the sodium / manganese oxide battery, which uses, for regeneration of the electrodes and fuels, electrolysis at high temperature, above 750°C, of the carbon dioxide, which can have a conversion efficiency close to 100%.

Some or all of the electricity produced may serve for generating and accelerating the ions towards and in the first target.

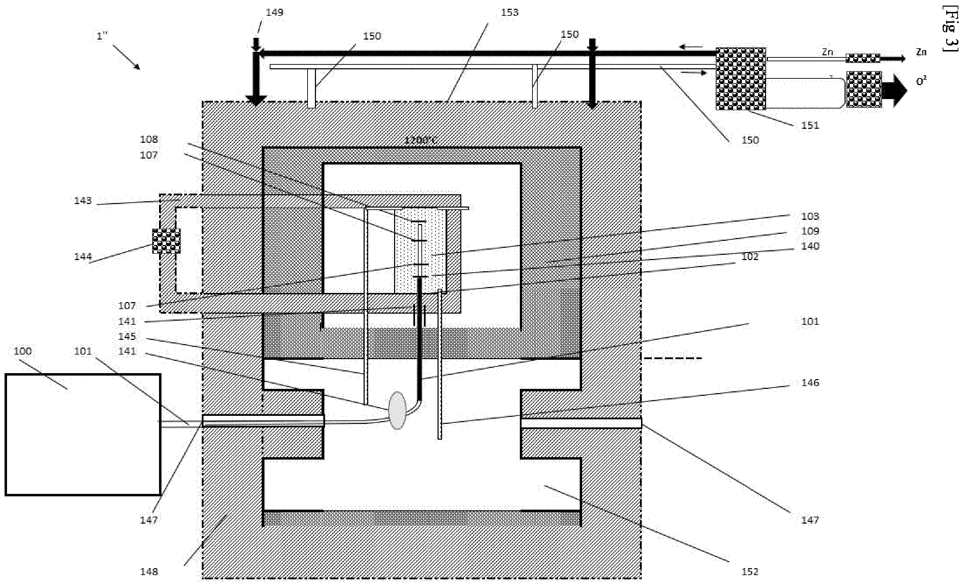

Fig. 3 shows a third embodiment of a device 1" according to the invention, configured for regenerating zinc oxide to zinc.

The device 1" comprises an assembly 100, comprising an ionization system and an ion accelerator configured for ionizing the source isotope and accelerating the ions obtained. Preferably, the source isotope in this embodiment is deuterium.

The deuterium ions are led via channel 101 into the second enclosure 102. The supply channel 101, for the part thereof comprised in the neutron absorption enclosure 109, is advantageously of helicoidal shape (not shown), rotation of the ions being provided by the presence of a magnetic field generated by a solenoid. The enclosure 102 contains the first target 103 in the form of gaseous di-tritium.

Advantageously, an electrode assembly comprising an anode 140, a cathode 108 and maintenance electrodes 107 is arranged in the second enclosure 102 and is configured for accelerating the ions introduced into the second enclosure by generating an electric field and/or for keeping the velocity of the ions constant within the second enclosure by generating an electric field. This electric field may have a value between 500 000 and 5 000 000 V/m, preferably of the order of 1 million volts per metre if the di-tritium is at a pressure of 1 atmosphere.

Preferably, a membrane 106 that is permeable to the ions but impermeable to gaseous di-tritium is arranged in the second enclosure 102, advantageously between the point of entry of the channel 101 into the second enclosure 102 and the electrodes 140, 108, 107.

In a preferred embodiment, the membrane 106 also constitutes the anode 140. Advantageously, solenoids 141 are arranged along the duct 101 and generate magnetic fields suitable for guiding and keeping the ion beam narrow in the duct 101.

The deuterium ions are accelerated to a sufficient velocity to generate nuclear fusion reactions with the tritium target contained in the second enclosure. The fusion reaction generates helium 4 and a neutron.

Tritium may be injected into the second enclosure 102 via the inlet channel 145. An outlet channel 146 advantageously makes it possible to evacuate the tritium, the helium generated as well as the deuterium ions that have not fused with the tritium. Channel 145 and channel 146 are advantageously also of helicoidal shape (not shown) for the part thereof contained in the enclosure 109.

Preferably, the outlet channel 146 leads to a separator, not shown, configured for separating helium from tritium and deuterium. The separator may for example cause the deuterium and the tritium to react with an oxidizing agent. The separator preferably also comprises a mechanism for cooling the di-tritium, the latter having been heated by the slowing down of the deuterium ions, also allowing the thermal energy to be recycled.

The energy of the ions may be of the order of 45 MeV.

The neutrons generated in the second enclosure 102 are absorbed, in particular in the third enclosure 109. The neutrons undergo nuclear reactions with the materials that they pass through and in particular the materials contained in the enclosure 109. Calcium hydride, whose hydrogen serves as moderator, the calcium as target material, which melts at 816°C, or sodium hydroxide under pressure are preferably selected as materials contained in the enclosure 109. This material is maintained at a temperature of 2000°C, allowing reduction of zinc oxide.

Alternatively, the enclosure 109 may contain a gas such as helium 3, which is both moderator and target, preferably at a high pressure, for example of the order of 10 atmospheres. This requires thicknesses of helium 3 of the order of 0.15 m. Preferably, an intermediate enclosure is arranged in the third enclosure around the second enclosure, said intermediate enclosure containing a moderator. If, however, the target material is boric or metaboric acid preferably in the liquid phase, an intermediate enclosure is preferably not used.

The heat produced by the Bragg effect within the second enclosure 102 is advantageously evacuated by a circuit for cooling the di-tritium, not shown, and/or by circulation of tin in a tin cooling circuit 143 arranged at least partly around the second enclosure 102. The circulation of tin, when the latter is heated to a sufficient temperature to be liquefied, is preferably provided by a pump 144.

The tin circulating in the circuit 143 also has the effect of absorbing neutrons and gamma rays.

The second and third enclosures 102, 109 are arranged in a fourth enclosure 148. The fourth enclosure 148 comprises orifices 147 configured to allow passage of the channels for supply and withdrawal of materials. Preferably, the orifices 147 are arranged in a lower part of the device 1", so that the nuclear reactions that take place in the second and the third enclosures do not generate radiation, which could pass through said orifices 147.

The fourth enclosure 148 advantageously contains zinc oxide powder ZnO and is configured for providing protection against the gamma radiation generated by the nuclear reactions taking place in the second and third enclosures.

Advantageously, the zinc oxide absorbs the gamma radiation that has not been absorbed by the neutron absorbing material. Moreover, the heat recovered by absorption of the gamma rays can be converted to chemical energy by the reaction ZnO → Zn + ½ O₂ at one atmosphere at 1975°C.

The zinc oxide may be introduced into the fourth enclosure 148 by an endless screw 149. The zinc, in the gaseous state for temperatures above 1727°C and the dioxygen produced in the fourth enclosure 148 are evacuated via the evacuation line 150. The dioxygen may be separated from the zinc for example by bringing the gas mixture to a pressure such that the partial pressure of the gaseous zinc reaches the pressure at which said gaseous zinc becomes liquid, i.e. a pressure above 30 GPa.

Advantageously, the zinc oxide powder is compacted in the fourth enclosure for example by screws and pistons in order to reduce its consumption.

Preferably, a circuit of heat-transfer metal such as tin 143 may be arranged in the fourth enclosure 148 and around the second enclosure 102, preferably surrounded by stainless steel tubes for cooling the enclosure 102. This metal is then subjected to nuclear reactions with the protons derived from the enclosure 102.

The circuit of tin 143 is preferably protected externally against emissions of ultraviolet rays resulting from degradation of tin to indium, if the tin contains the tin isotope 112.

If the tin contains isotopes 113, 121 and/or 123, traces of indium and antimony may be found in the tin circuit 143. These traces may be isolated by heating the tin, the boiling points of indium and antimony being lower than that of tin.

Advantageously, the second and third enclosures 102, 109 are separated at least partly by a space 151, where an at least partial vacuum is maintained. This makes it possible advantageously to increase the volumes of materials absorbing neutrons and of materials absorbing gamma rays in order to reduce the heating energy density and thus give more thermal inertia to the device in the case of failure or malfunction of the cooling devices.

More advantageously, the third and fourth enclosures 109, 148 are separated at least partly by a space 152 where at least a partial vacuum is maintained. The space 152 is configured to be a zone protected from neutrons, from which no gamma rays are generated, and in which the orifices 147 may be arranged in axes not irradiated with gamma rays originating in particular from the elements 102, 43, 109 and 101. The orifices 147 in particular are preferably not aligned with the device 109.

Preferably, a heat-reflecting wall for thermal protection 153, advantageously having low thermal conductivity, for example comprising Bragg mirrors such as hot mirrors, is arranged around the fourth enclosure 148.

Fig. 4 illustrates an assembly 100 comprising an ionization system and an ion accelerator as used in the device according to the invention.

In the example shown, the assembly 100 comprises a laser 2, a reinsertion circuit 3 and a first enclosure 9. The light generated by the laser 2, optionally amplified in the reinsertion circuit 3, is used for ionizing the source isotope contained in the first enclosure 9.

The assembly 100 also comprises an anode 4 and a cathode 6 preferably arranged at opposite ends of the first enclosure 9 and a high-voltage generator 10.

Ionization of the source isotope takes place in the electric field created by the electrodes 4 and 6. The ions generated are accelerated by this electric field.

If ions are produced outside of the electric field, they are surrounded by the electrons resulting from the ionization process, which ensure electrical neutrality of the whole.

To avoid accumulation of low-velocity ions, the electric field in the ionization zone is preferably selected to be high enough, while remaining below a value that could cause breakdown of the gas of the source isotope. The electric field may for example have a value between 4000 and 4500 V/m, and the source isotope can be ionized over a considerable thickness, especially with a large cross-section of the ionizing light.

In order to accelerate the ions of the source isotope sufficiently to allow fusion of the ions with nuclei of the first target, the voltage generated by the generator 10 may be between 30 000 V and 80 000 000 V. The generator 10 for example consists of generators marketed by the company Genvolt under the name Perseus, mounted in series.

The anode 4 is preferably placed in the compartment containing the source element to be ionized. The anode 4 is conductive, which allows it to conduct and evacuate the electrons produced by the ionization of the source isotope. The cathode is preferably covered with a dielectric layer, to prevent electrons being stripped from it.

Advantageously, a coil 8 configured for generating a magnetic field, preferably between 0.1 T and 10 T, for example 0.2 T, is arranged around the enclosure 9 along an axis parallel to the electric field generated between the electrodes 4 and 6 and tending to keep the ions of the source isotope in the axis of the coil. The coil 8 is advantageously centred on an axis passing through the intersection of the path of the light generated by the laser 2 and the axis of the electric field between the electrodes 4 and 6.

Thus, the first isotope in the first enclosure is preferably surrounded by the coil 8 configured for generating a magnetic field. This magnetic field makes it possible to prevent the ionized isotopes from moving longitudinally in a direction other than the direction of acceleration defined by the electric field generated by the generator 10 between the electrodes 4 and 6. This limits the contact of the ionized isotopes with the walls of the enclosure, while keeping the ionized isotopes close to the axis of the electric field.

In the embodiment in Fig. 5, the first enclosure preferably comprises a membrane permeable to the ionized isotopes but impermeable to the isotopes in gaseous form in order to prevent passage of the source isotope in the accelerating field. It may be an assembly of six layers of hexagonal boron nitride known as such, as described in the article Vapor-liquid-solid growth of large-area multilayer hexagonal boron nitride on dielectric substrates, Z. Shi et al., Nature communications, 11(1), 1-8, 2020 and in "Large Area Monolayer Hexagonal Boron Nitride on Pt foil", J.H. Park et al., Acs Nano, 8(8), 8520-8528, 2014.

The location of the membrane is selected in such a way that the value of the electric field at the level of the membrane is below the breakdown threshold of the first isotope in the gaseous state. This threshold depends on the pressure of the gas and can be evaluated using Paschen's law.

The ions of the first isotope are then accelerated by the electric field generated by the generator 10. As the ionized isotopes generate a radial electric field, i.e. orthogonal to the axis of the accelerating field, some ionized isotopes may be deflected towards the exterior of the accelerating field. In this case, it is advantageous to provide a solenoid around the first enclosure, configured for generating a magnetic field that tends to keep the ionized isotopes in the axis of the solenoid, which may coincide with the axis of the first enclosure. The magnetic field generated may for example be between 0.1 T and 10 T.

The calculations carried out by the inventor show that the deviation of the ionized isotopes due to the electric field generated by the ionized isotopes may be slight, depending on the configuration of the device and in particular owing to the influence of the magnetic field generated by the coil or coils.

The first isotope may be introduced into the first enclosure by means of a pressure reducing valve. However, when the first isotope is in the gaseous state and is ionized at rates that do not allow its homogeneous replacement, or to prevent ions being produced at an insufficient distance from the anode, or to concentrate the production of ions between the electrodes 4 and 6, the source gas is preferably brought into the enclosure via a first pipe, the end of which opening into the first enclosure forms a nozzle. The gas is then preferably aspirated towards a second pipe arranged in the axis of the nozzle of the first pipe. The end of the second pipe opening into the first enclosure is preferably formed as a funnel. The inlet of the ion acceleration line is then preferably near the intersection of the gas jet and the path of the light originating from the optical input within the first enclosure. The first and second pipes are preferably connected fluidically to a pump for forcing circulation of the gas in the pipes, as well as to a gas reserve for injecting gas into the first enclosure as it is consumed, i.e. ionized.

The source gas then circulates in a gas circulating circuit.

A filtration device for filtering the circulating gas to remove the impurities from it may advantageously be arranged in the gas circulating circuit.

A device configured for producing a vacuum in the compartment of the first enclosure where the gas circulates and optionally for reintroducing the source gas into the circuit may advantageously be used.

As shown in detail in Fig. 5, the assembly 100 comprises a laser 2. The light produced by the laser 2 is guided by a supply waveguide 20 to a reinsertion circuit 3.

The supply waveguide 20 is for example a single-mode optical fibre. The supply waveguide 20 may also be a rectangular waveguide.

The reinsertion circuit 3 comprises an input waveguide 21 configured to guide the light circulating in the reinsertion circuit 3 to an optical input 32 of the enclosure 9.

The input waveguide 21 may be a single-mode optical fibre and comprises an end 22 that is advantageously covered with an anti-reflective coating, the end being cut and polished in the form of a lens.

Preferably, a first set of focusing lenses 23 covered with anti-reflective coatings is arranged between the end 22 of the input waveguide and the optical input 32 of the enclosure 9.

As an alternative to the use of an anti-reflective coating, the system may be configured so that the light leaving the end 22 of the input waveguide is at the Brewster angle, thus avoiding partial reflection of the light at the interface of the end 22 and the surrounding medium (atmosphere or partial vacuum).

Once the light enters the enclosure 9 via the optical input 32, part of the light generated by the laser interacts with the source material 11 in the enclosure 9 so as to ionize the isotopes of the source material.

However, another part of the light is able to pass through the enclosure 9 without interacting with source isotopes. In order to recover this unabsorbed light, the enclosure 9 may also comprise an optical output 33 configured to recover the light that was not absorbed in the enclosure 9.

The light may optionally be reflected in the enclosure by one or more mirrors before reaching the optical output 33.

Preferably, a second set of focusing lenses 25 is arranged between the optical output 33 and the end 26 of an output waveguide 34 to facilitate its reinsertion in the waveguide 34. The optical coupling between the optical output 33 and the end 26 may be carried out in the same way as the optical coupling between the optical input 32 and the end 22.

The output waveguide 34 is connected optically to the input waveguide 21 to form the reinsertion circuit 3.

According to a particular embodiment, the input and output waveguides may form just one single-mode optical fibre.

A wave concentrating device, such as a mode blocking device, may be integrated in the laser for the purpose of superposing different cycles of a wave of coherent light, thus reducing its duration while increasing its instantaneous power.

The duration of an output pulse from the wave concentrating device advantageously corresponds to a length of the pulse of the order of the wavelength of the coherent wave produced by the laser; the pulse is advantageously repeated at a frequency selected so that the particles accelerated by a pulse have reached the target before particles are accelerated by a new pulse.

The wave concentrating device used is known per se. It may be of the Coherent Amplification Network type as described in the presentation "ICAN and 100 GeV's Ascent", J. Mourou et al., EuroNNAC, CERN Meeting, 3 May 2012.

Ionization systems using a method of ionization other than by laser may also be used in the context of the invention, in particular by irradiation with X-rays.

A device according to the invention may also have one or more of the following features.

### Cylindrical geometry

The second enclosure, the third enclosure and the wall for protection against gamma rays are preferably of circular symmetry about one and the same axis. This symmetry makes it possible to use homogeneous materials around the device and therefore make savings on the amount thereof. The first enclosure is advantageously of elliptical shape so as to be able to withstand the pressure of the first target in gaseous form. A high pressure of the first target makes it possible in particular to reduce the dimensions of the second enclosure. In one embodiment, the second enclosure may have a length between 30 cm and 1 m for a pressure of dihydrogen of 15 atmospheres.

### First nuclear reaction

One or more strong electric fields are used for accelerating the source isotopes in the form of ions to a sufficient velocity so that on impact with the first target, the kinetic energy accumulated by the ions is sufficient to allow the nuclei of the accelerated ions and of the first target to fuse. The velocity of the ions may be for example between 30 MeV and 100 MeV, preferably between 40 and 80 MeV.

The source and target nuclei react to produce helium 3 and a neutron, or helium 4 and a neutron if the first and second isotopes are, respectively, both deuterium, or deuterium and tritium. The second isotope may also be a heavy isotope.

The first nuclear reaction, of fusion or of spallation, produces one or more neutrons.

### Second nuclear reaction

Various elements or combinations of elements may be used as the second target reacting with the neutrons emitted by the first nuclear reaction. In particular, compounds containing carbon, nitrogen and hydrogen may be used, but also helium, in particular helium 3 or argon mixed with gaseous di-protium, boron, boric acid, calcium, calcium hydride as well as magnesium and magnesium hydride. Preferably, the second target does not comprise actinides and has an atomic number less than or equal to 88, the actinides being regarded as fissile and able to cause chain reactions of nuclear fission.

The calcium hydride advantageously has a high melting point (886°C) and does not decompose when heated, while releasing 8.4 MeV of energy by fusion of calcium with a neutron and incorporating two hydrogen atoms, which make it possible to contribute effectively to the slowing down of the neutrons. Helium 3, in particular mixed with dihydrogen, is also very advantageous even though gaseous, helium 3 having a large effective cross-section and releasing 20.8 MeV of energy during its fusion with a neutron. Boron is solid and does not slow down the neutrons, but it has a large effective cross-section that allows it to be very reactive with said neutrons and it may therefore be inserted in other materials slowing down said neutrons such as water, calcium hydride or dihydrogen.

The water is advantageously kept under pressure so that it remains liquid. Alternatively, the water is in gaseous form, below or above its critical temperature of 374°C. In gaseous form, the moderators and second target materials are advantageously kept under pressure, advantageously between 15 and 100 atmospheres, for example 50 atmospheres, so that they are able to occupy less space while absorbing and/or slowing the neutrons.

The probability of the presence of an actinide in a volume of material can be estimated by multiplying the number of atoms present in the volume by the probability that one of the atoms has been struck by a neutron, raised to the power Delta, Delta being the difference between 89 and the atomic number of an element of the second target before being irradiated with neutrons.

If, for example, the volume of the second target is 5 x 10⁻² m³ of zinc oxide, weighing 280 kg and having 3443 moles of zinc and of oxygen, irradiation producing about 5.5 MeV per neutron will require 1.7 x 10²² neutrons, or 0.028 moles of neutrons, to produce 1.5 x 10¹⁰ J. The probability of one of the nuclei derived from the 3443 moles of zinc reacting 58 times with a neutron to become an actinide is 6.2 10⁻²⁹⁶, and therefore the probability that there is an actinide particle is 1.310⁻²⁶⁸.

### Source elements and target elements

It is possible to use various elements as the second target.

Among the reactions that are possible in the context of the invention, a non-exhaustive list of examples of second targets is given in Table 2, together with their melting and boiling points, the energy released by the first fusion reaction of deuterium with tritium added to the energy of the second nuclear reaction with the second target and the neutron capture cross-section.

**[Table 2]**

| Isotope | Melting point (°C) | Boiling point (°C) | E (MeV) | cross-section (barn) |
|---|---|---|---|---|
| Argon 36 | -189.4 | -185.9 | 8.88 | 0.675 |
| Argon 38 | -189.4 | -185.9 | 6.67 | 0.675 |
| Boron 10 | 2300 | 2550 | 11.86 | 767 |
| Carbon 12 | 3550 | 4827 | 15.07 | 0.0035 |
| Calcium 40 | 839 | 1487 | 8.45 | 0.41 |
| Deuterium | -259.1 | -252.9 | 6.32 | 0.000519 |
| Helium 3 | -272.2 | -268.9 | 20.79 | 5333 |
| Protium | -259.1 | -252.9 | 2.26 | 0.3326 |
| Magnesium 25 | 648.8 | 1107 | 11.21 | 0.19 |
| Magnesium 24 | 648.8 | 1107 | 7.41 | 0.05 |
| Magnesium 26 | 648.8 | 1107 | 6.51 | 0.0382 |
| Oxygen 16 | -218.4 | -182.9 | 4.19 | 0.0001 |
| Sodium 23 | 97.8 | 883 | 7.03 | 0.53 |
| Iron 56 | 1538 | 2861 | 7.72 | 2.59 |
| Nickel 58 | 1455 | 2913 | 9.09 | 4.6 |
| Nickel 60 | 1455 | 2913 | 7.90 | 2.9 |

"Stable isotope" means an isotope whose half-life is greater than 10¹² years.

Other isotopes than those mentioned in Table 2 may be suitable in the context of the invention. The invention may also allow the simultaneous use of one or of several different isotopes as the second target.

The second target may be introduced into the third enclosure in gaseous, solid or liquid form.

### Complex targets and moderators

The invention allows the use of materials consisting of complex molecules, i.e. molecules made up of several different elements, as well as mixtures of molecules, as materials for slowing down the neutrons and/or as the second target. The use of complex molecules makes it possible in particular to manipulate target elements in a preferred state, for example gaseous, liquid or solid, when these isolated elements are in a different state in the conditions of implementation of the invention. This may in particular make it possible to facilitate removal of the heat produced, when the element in a complex molecule forms a fluid and the isolated element forms a solid. The use of complex molecules also makes it possible to use the heat produced by the second nuclear reaction within the second target to promote one or more chemical reactions there.

Thus, the third enclosure containing the second target may advantageously contain one or more catalysts, taking advantage of the heat generated in the second target to promote chemical reactions.

The chemical reaction may for example be the decomposition of methane:
CH₄ → C +2 Hz when methane is heated to a temperature above 1200°C.

The chemical reaction may also be the reduction of zinc oxide:
ZnO + H₂ → Zn + H₂O This endothermic reaction may take place at 1000°C.
ZnO +CO → Zn + CO₂ at 1000°C
ZnO → Zn + ½ O₂ at 1727°C

The chemical reaction may also be the synthesis of ammonia by the Haber process:
N₂(g) + 3 H₂(g) 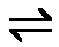 2 NH₃(g) on an iron catalyst bed, at 350°C

### Protection against gamma rays

The energies involved in nuclear reactions are large. Considerable gamma radiation is likely to be generated by the device according to the invention.

Thus, in an advantageous variant, protection against gamma radiation may be arranged around the device.

The thickness of this protection against gamma rays can be determined as a function of the power of the gamma radiation generated, which depends on several parameters relating to the arrangement of the device, its dimensions, the energy production of the average nuclear reactions during use of the device, but also the tolerance on the power of gamma radiation reaching the external environment.

According to the inventor's calculations, for the first deuterium-deuterium nuclear reaction and a second neutron-helium3 nuclear reaction, a wall of tungsten 18 cm thick, or of lead 28 cm thick, 40 cm away from the centre of the device where the gamma rays are produced, makes it possible to maintain an annual dose of gamma radiation below 5 millisievert per year, in the case of a vehicle engine located at more than 1 m from the passengers, producing 6.5 10⁹ joules per year, of which 86% is produced by gamma rays and 14% by slowing down of the neutrons, the provenance of the acceptable radiation dose being shared fairly between the neutrons and the gamma rays, or in the case of a power station producing 3.9 10¹¹ joules per year comprising a device according to the invention whose employees are kept at a distance greater than 50 m from the device. This distance may be reduced further for example by adding concrete walls between the places frequented by the employees and the device.

### Protection against radiation passing through the supply orifices

The gamma rays follow a rectilinear trajectory from their place of emission. It is therefore preferable that no orifice opening onto the exterior of the device should be aligned, or should comprise an aligned perspective, with a place of nuclear reaction, whether between the source ion and the first target or between the neutron with another material of the device, including the second target. The orifices may for example have a spiral form and be arranged within a material that absorbs gamma rays. Alternatively, an opening onto the exterior of the device may comprise two orifices: a first orifice arranged through a first material or volume of protection against gamma rays is aligned on a site of production of gamma rays, a second material or volume that absorbs gamma rays being arranged on the axis of this alignment and a second orifice being arranged between these two volumes away from the axis of alignment.

### Protection against the neutrons and absorption of said neutrons

The neutrons from the first nuclear reaction in the second enclosure must first slow down before being absorbed by the second target material for fusing with the latter. To prevent the slowed neutrons leaving the device, a material that reacts easily with the neutrons, for example boron 10 or helium 3, is arranged around the device, or else around the material or materials slowing down said neutrons.

### Materials absorbing the neutrons

Helium may advantageously be put in supercritical conditions of temperature and pressure, at a pressure greater than 2.26 atmospheres for example, making it quasi-fluid and allowing it to have densities greater than the gaseous densities. Boron may be combined with other elements to form other chemical species, in particular boron sesquioxide (B₂O₃), with melting and boiling points of 450°C and 1860°C respectively, so as to be able to be manipulated in the liquid form and therefore on the one hand to be replaced when consumed by the nuclear reaction and on the other hand to be used as heat transfer fluid. Since the nuclear reaction creates a release of energy of gamma rays, protection against gamma rays, consisting of a material that absorbs the gamma ray energy, is preferably arranged around the device in which the second nuclear reaction may take place.

### Materials for slowing down the neutrons

The material for slowing down the neutrons may be water, preferably liquid at a temperature below the critical temperature of 374.15°C or in a supercritical condition at a pressure greater than its critical pressure (220 atm). Alternatively, other materials in the solid or liquid state, in particular protium-rich materials such as calcium hydride CaH₂, or CaD₂, calcium hydroxide (Ca(OH)₂), aluminium hydroxide (Al(OH)₃), nickel(II) hydroxide (Ni(OH)₂), or an alcohol, a polymer, an alkane, such as for example methane CH₄, preferably maintained at a pressure greater than the critical pressure of said alkane, which is 46 atmospheres, or else dihydrogen H₂ preferably maintained at a pressure greater than its critical pressure of 13 atmospheres, but also helium 3 or 4, argon 36, methane, or water in liquid or solid form, dihydrogen borate H₂BO₃, polystyrene, sodium hydroxide NaOH, which has a boiling point of 1388°C and is chemically stable, potassium hydroxide KOH, which has a boiling point of 1327°C and is chemically stable, decaborane B₁₀H₁₄.

Thus, according to the inventor's calculations, 3 mm thick layers of supercritical helium 3, or of boron 10, or of boron sesquioxide may allow more than 99% of the slow neutrons to be absorbed, whereas walls of water 10 cm thick or 6 cm of calcium hydride or 25 cm of dihydrogen in supercritical conditions with a density of 0.02 cm³ may allow the fast neutron flux to be reduced by 99%. The reaction of fusion of a neutron with helium 3 is particularly productive of energy, releasing about 20 MeV of energy per isotope; the reaction of fusion of a neutron with boron 10 releases about 11 MeV of energy per isotope. Protection with a thickness of 26 cm of CaH₂ surrounded by a 0.62 cm thick layer of B₂O₃ may for example, according to the inventor's calculations, allow the dose of the neutrons leaving the device to be reduced by a factor of 9 x 10⁸; this factor corresponds to the acceptable dose for the vehicle engine described above in the context of protection against gamma rays.

### Mixtures of target materials and moderators

The second target material may also be arranged in the moderator, thus limiting the flux of slow neutrons directed towards the exterior of the device and therefore the nuclear reactions taking place at the periphery of the moderator. Pipes for circulation of the target material may in particular be installed within the moderator. Alternatively, or in combination, the material used for moderating may also be used as the target material, this target material possibly being for example water in the liquid form or boric acid H₂BO₃ or metaboric acid H₃B₃O₆ maintained at their respective temperatures of decomposition, which are 185°C and 300°C.

### Protection against the neutrons passing through the supply orifices

As in the embodiment illustrated in Fig. 3, the third enclosure may comprise orifices 147. These orifices may allow passage of a flux of neutrons to the exterior of the device.

The orifices 147 make it possible to introduce materials, for example liquids, gases, ions, electric currents, in the spaces of the device where neutrons circulate, for example in the first, second or third enclosure. The orifices 147 are preferably of solenoidal shape within a material slowing down the neutrons, itself preferably covered, on its interface with said orifice, with a neutron-absorbing material.

If the orifice allows the accelerated ions to be introduced, the neutrons entering said orifice will only encounter very few molecules or ions and will suffer very little deflection there, but will not be able to leave in a straight line. A winding comprising an electric conductor around the solenoid, within the ion moderator and/or outside the latter, may allow a magnetic field to be formed within the orifice parallel to the axis of the solenoid and thus keep the ions in the solenoidal orifice.

The thickness of the material slowing the neutrons around a cavity protected against the escape of neutrons is preferably greater around the solenoidal orifice, so that the neutrons that have travelled to the interior of the orifice may be slowed by at least as much material as if they had not travelled through.

In the second variant, the velocity of the ions at the tube outlet is arranged so that, slowed down by the Bragg effect in gaseous deuterium, the edges and ends of the beam of deuterium ions are either very close to the space or the confining wall of the space where the second nuclear reaction takes place, for example 2 mm, to reduce the space in which the released neutrons can react with the deuterium.

### Separation of the various isotopes

Most often, the elements produced by the second nuclear reaction are different isotopes of one and the same element. According to an advantageous embodiment, the device therefore has a device for separating the isotopes produced from the second target isotopes, especially if the latter are less reactive with the neutrons or if they produce a different amount of energy.

Separation may be performed in particular by phase differentiation at a temperature of 0.8 K, by membrane filtration or by selective ionization by laser or by a Stem-Gerlach device. According to one embodiment, the mixture may be enriched with helium 3 by refrigeration at 0.8 K, by the method described in the article *"*Helium3 isotope separation and lambda front observation", Kempiński et al., Separation and Purification Technology, volume 210, 8 February 2019, pages 276-280.

According to an alternative embodiment, helium 3 can be separated from helium 4 by filtering with a membrane as described in the article "Isotopic separation of helium through graphyne membranes: a ring polymer molecular dynamics study", Bhomwick et al., Physical Chemistry Chemical Physics, number 34, 2021, in particular a graphyne membrane at 30 K.

According to another embodiment, separation of the isotopes may be done by laser with circularly polarized light and electric field by which only the elements having a magnetic moment are ionized and then moved by an electric field, as described in the article *"*Use of angular-momentum selection rules for laser isotope separation", Balling et al., Appl. Phys. Lett. 29, 411, 1976, or by centrifugation.

Alternatively, a jet of a helium 3 / helium 4 liquid or gaseous mixture may be subjected to a non-uniform magnetic field, as described by Stem and Gerlach ("Der experimentelle Nachweis der Richtungsquantelung im Magnetfeld", Gerlach W., Stem O., Zeitschrift für Physik 9 (1): 349-352, 1922), the isotopes of helium 4, which have a nuclear spin of 0 whereas helium 3 has a nuclear spin of ½, will not be deflected by the magnetic field whereas helium 3 may be.

Several successive cycles of isotope separation may be carried out before reinsertion of the second target in its enclosure, especially if fusion reactions between the neutrons and the isotopes produced by the second nuclear reaction are undesirable, as they may give rise to unstable elements or may have reactivities or releases of energy with the neutrons that are too different from the reactivities and releases of energy of the reactions of nuclear fusion of the neutrons with the other second target isotope or isotopes.

### Regeneration of the neutron absorbing material

The neutron absorbing material is advantageously replaceable, in particular for its parts where the neutrons are absorbed most often. This replacement may be mechanical, the device being configured to allow this, or it may be carried out by replacing a fluid, whether the latter is in the liquid, gaseous or supercritical form. Moreover, mechanisms for separating the material produced by the nuclear reaction of the second target material may be arranged in the device.

Separation of the product of the second target material may be done, for example, by phase differentiation when absorption of a neutron by the second target creates an unstable element that degrades to a different element, the two elements having different melting, boiling or sublimation temperatures. This is the case in particular when tritium degrades to helium 3, boron 12 to carbon 12, carbon 15 to nitrogen 15, nitrogen 16 to oxygen 16, oxygen 19 to fluorine 19, sodium 24 to magnesium 24. In the case of helium 5, it degrades to helium 4 by release of a neutron, the inverse of the fusion reaction that may have created it. Moreover, its life of 7 x 10⁻²¹ s means that it may react very little with the neutrons from the first nuclear reaction. As it absorbs the neutrons, helium 3 is therefore gradually transformed into helium 4.

### Cooling lines and plates

The walls for protection against gamma rays, as well as optionally the second and third enclosures, may also be configured so that a cooling fluid circulates within them, for example in channels arranged in the walls, or between a plurality of successive walls.

### Circulation of gaseous deuterium

When the first and second isotopes are deuterium, it is noted that the first nuclear reaction fusing two deuterium nuclei is very exothermic, but the energy produced resides essentially in the kinetic energy of the neutrons and the helium generated. The Bragg effect, which slows down the ions in the second enclosure filled with gaseous deuterium, also heats the gas, which may advantageously be circulated in a cooling circuit leaving the device. The heat recovered is advantageously utilized, for example for producing electricity.

### Ion beam

The ions of the first isotope, for example deuterium ions, are introduced into the second enclosure via a supply channel, at the end of which preferably a membrane is arranged, configured to prevent gaseous deuterium entering said channel, as illustrated in Fig. 1. This therefore allows a vacuum to be maintained in this channel, which promotes transport of the ions.

This membrane consists for example of six layers of graphene, graphane, or hexagonal boron nitride. The ions, at the outlet of the pipeline, are preferably kept concentrated by means of a longitudinal magnetic field with the same direction as the axis of revolution of the second enclosure, generated by a solenoid surrounding the second enclosure. The supply channel for the ions is preferably covered internally with a dielectric film to prevent electrons being stripped from the internal wall of the channel.

### Ionization system

According to one embodiment, the ionization system comprises:
- a laser,
- an input waveguide configured for guiding the light emitted by the laser to an optical input of the enclosure, the optical input being configured to allow illumination of the source material by the emitted light.

The laser may be configured to emit light whose instantaneous power is sufficient to allow ionization of the source material. The ionization system may also comprise a wave concentrator configured to superpose a plurality of cycles of the light emitted by the laser so as to increase the instantaneous power of the light emitted, the wave concentrator preferably being of the Coherent Amplification Network type. Moreover, the device may advantageously comprise an output waveguide configured to guide light not absorbed by the source material from an optical output of the enclosure to the optical input of the enclosure, and the enclosure may comprise a plurality of mirrors configured to reflect the light emitted by the laser between the optical input and the optical output so as to illuminate the source material several times.

Alternatively, ionization may be obtained for example by irradiation of the first isotope with X-rays produced for example by an X-ray tube placed in the first enclosure, the X-rays emitted by said tube having a wavelength less than Planck's constant multiplied by the speed of light in a vacuum and divided by the ionization energy of the first isotope. The walls of the first enclosure, apart from the orifices required for passage of the ions and for entry of the first isotope, are preferably covered or flanked with X-ray mirrors as described in the article "SOFT X-RAY REFLECTIVITY: FROM QUASI-PERFECT MIRRORS TO ACCELERATOR WALLS", F. Schäfers, R. Cimino, DOI: 10.5170/CERN-2013-002.105, arXiv:1308.1295, or using Bragg mirrors produced for example by a technique of atomic layer deposition.

### Laser of the ionization system

In the embodiment shown in Fig. 4 as well as in that shown in Fig. 5, the source isotopes are ionized by a laser.

The wavelength of the light produced by the laser is for example 369 nm, 269 nm or 182 nm. The wavelength produced may also be smaller, lasers with wavelength as small as 13.5 nm being known.

The light may be produced by laser diodes. A continuous wave laser such as VECSELs may also be used.

The wavelength of 369 nm may for example be obtained by mixing laser light of 1470 nm with the second harmonic of laser light of 985 nm.

The wavelength of 269 nm may be obtained using the 3rd harmonic of laser light of wavelength 808 nm.

The wavelength of 182 nm may be obtained by mixing the 5th harmonic of laser light of 1064 nm with laser light of 1260 nm. The mechanisms for obtaining the harmonics and mixtures of wavelength are described for example in application WO 2018/128963 A1. The laser beam may be magnified or focused by optical lenses so that the power per unit area of the laser beam does not exceed the limits of dislocation of certain materials used in the ionization device.

The size of the lenses is advantageously selected to allow focusing of the laser beam on a sufficient length in the first enclosure, where ionization of the source takes place, and then reach the lenses of the reinsertion circuit.

The frequency of the light produced by the laser may be doubled or quadrupled by passing through well chosen non-linear and non-symmetric crystals. The frequency may also be multiplied by five using a method of generating harmonics according to which the laser beam passes through a rare gas such as argon.

It is also possible to use coherent light of 361 nm produced by a gallium nitride GaN laser diode, with a forbidden band with a width of 3.44 eV; or coherent light of 188 nm produced by an indium gallium nitrite (InGaN) laser in which the proportion of gallium is selected to produce a semiconductor material with a forbidden band with a width of 3.3 eV, the frequency of which is doubled by passing through a crystal, for example a crystal of borate fluoride such as KBe₂BO₃F₂ (KBBF), which is transparent to wavelengths as small as 147 nm and supports powers of up to 9.1011 W/cm².

Coherent light of 166 nm produced by a quantum-well laser may also be used.

The wave trains produced with a laser in combination with mode blocking are repeated at frequencies that may be between 0.1 kHz and 10 kHz. However, the first reinsertion circuit for discontinuous wave trains as described above and illustrated in Fig. 2 has the effect of circulating the wave in a loop and therefore repeating the wave trains at frequencies equal to the speed of light in the circuit divided by the total length of the circuit.

The light circulating in the reinsertion circuit for discontinuous wave trains is susceptible to power loss by attenuation between two successive pulses, owing to a degree of opacity of the materials guiding the light, and its passages through the ionization chamber.

The reinsertion circuits are only able to reinsert light of wavelength greater than 150 nm, insofar as few glasses or crystals are transparent to smaller wavelengths.

It is not necessary to use a wavelength of the ionizing light for which the energy of the photons is greater than the ionization energy of the gas, as disclosed in the article "Laser stripping of hydrogen atoms by direct ionization" Brunetti et al., New Journal of Physics, Volume 17, May 2015.

### Acceleration of the ions

The ions generated by the ionization system are accelerated by electric fields, either in linear accelerators that are able to accelerate continuous ion fluxes with continuous voltages, or in cyclotrons or synchrotrons that can accelerate packets of ions between two electrodes whose electrical potential difference alternates between positive and negative.

### Linear accelerator

Thus, the ion accelerator may be linear, comprising a high-voltage generator connected electrically to a first electrode arranged in the enclosure, preferably at a first end of the enclosure, and to a second electrode, as described in connection with Fig. 5.

### Accelerating cyclotron

Alternatively, the accelerator comprises a cyclotron, and the ions are produced or sent as packets in the cyclotron, preferably near its centre.

### Accelerating synchrotron

As a further alternative, the accelerator comprises a synchrotron, and the ions are produced or sent as packets in the synchrotron, the magnetic field confining the trajectory of the ions being variable and allowing the ions to be confined in two half-tubes instead of dees of cyclotrons.

### Internal walls of cyclotrons, synchrotrons and maintenance electrodes

The internal walls of the cyclotron or synchrotron as well as the walls of the maintenance electrodes as described hereunder, are advantageously covered with dielectric layers, for example of polymers or of glass resistant to the electric fields resulting from the potential difference applied to the two dees of the cyclotrons, to the two tubes of the synchrotrons or to the various maintenance electrodes.

### Mixed accelerator

Alternatively, the ions are accelerated by a combination of linear accelerators and cyclotrons and/or synchrotrons, the ions emitted in packets from a linear accelerator being for example injected into a cyclotron near its centre, for example to be directed at the outlet to a second linear accelerator. The ions, if they are injected into the cyclotron with a velocity whose component along the axis of the cyclotron is non-zero, are preferably slowed down in this direction by an electric field of the same direction and of opposite sense generated by electrodes located close to or surrounding the centre of the cyclotron, advantageously allowing this component of the velocity to be cancelled, whereas the ions still circulate in this zone.

The various accelerators used are preferably isolated electrically from one another, their electrical supplies for example if they are electrical with alternating current, being isolated from one another by transformers with windings.

The ion accelerator(s) is/are preferably devoid of gas to avoid the Bragg effect of braking of the ions and are therefore preferably protected at their inlet and at their outlet by membranes permeable to the ions and impermeable to the gases present on the outside and equipped with pumps allowing a vacuum to be created there. The device is then preferably arranged in such a way that said membranes can be replaced episodically or continuously, the latter being able to degrade during nuclear reactions with the accelerated ions or by simple heating due to the ions passing through.

### Maintenance electrodes

The ions are slowed down when they enter the first target, for example gaseous deuterium. We may therefore ensure that an electric field is present in the first target, which opposes the slowing down of the ions.

Advantageously, as illustrated in Fig. 1, one or more maintenance electrodes, configured for generating an electric field and maintaining constant velocity of the ions, despite the effects that cause them to slow down, in particular the Bragg effect, are arranged at the ends of the second enclosure containing the first target, or within the second enclosure.

### Maintenance cyclotron

Alternatively, if the ions are grouped in packets, a cyclotron may serve to maintain their velocity or to reaccelerate them when they pass from one dee to the other. The ions of the first isotope can then enter the cyclotron, preferably already accelerated by an accelerating cyclotron or by a linear accelerator, outside of the cyclotron; the second isotope, for example deuterium or gaseous tritium, ensures its slowing down until the first passage between the two dees if the latter is completely or partly outside of this zone between the two dees, for example inside one or each of the dees.

### Channel supplying the ions from the first isotope to the second enclosure

The channel supplying the ions in the second enclosure is preferably devoid of gas, to avoid braking of the ions there. Advantageously, it is coated on its internal wall with a dielectric layer to prevent electrons being stripped from it. It may be arranged so as to pass within one or more solenoids generating a magnetic field making it possible to prevent the ion beam diverging. The ion beam may be oriented by magnetic lenses and magnetic fields, thus allowing it to have a helicoidal trajectory, or else to change direction, in particular before it enters the second enclosure containing the first target.

The device according to the invention may be used in the following applications.

### Use of zinc oxide for gamma protection

In a preferred embodiment illustrated in Fig. 3, zinc oxide may be used both for protection against gamma radiation and for being converted to zinc and oxygen.

Zinc oxide is a powder that decomposes at about 1727°C into zinc and oxygen. This powder may be introduced as a material for protection against neutrons and protection against gamma rays. The gamma radiation generated by the device heats the powder, which decomposes into zinc and oxygen, both of which can be evacuated in the gaseous state, preferably at a temperature above 1727°C. The zinc and the oxygen can be separated from one another, for example by centrifugation, and then cooled, or else cooled very quickly without first being separated. Rapid cooling allows condensation of the zinc as liquid or solid before the zinc recombines with the oxygen.

Orifices allowing supply of zinc oxide as well as the discharge of gases are advantageously provided. Means may also be incorporated for circulating and tamping of the zinc oxide powder (not shown in Fig. 5) as well as pipes, for example made of tungsten, allowing circulation of a cooling fluid within the zinc oxide powder. The cooling fluid is for example tin, whose melting and boiling points are 232°C and 2270°C, and it has the atomic number 50, advantageously well below 88.

The regenerated zinc and zinc oxide may for example be used in a liquid fuel cell SOFC (acronym of "Solid Oxide Fuel Cell") as described hereunder, to produce electrical energy. The first target, for example gaseous deuterium, in the second enclosure is advantageously cooled by forced convection in a cooler allowing recovery and utilization of the heat generated in particular by the Bragg effect in the second enclosure.

### Use of lithium 6 as second target for producing tritium

Tritium may be obtained by exothermic disintegration of lithium 6 activated by a neutron according to the following reaction:

⁶Li + n → ⁴He + T + 4.8 MeV

where ⁶Li is lithium 6, ⁴He is helium 4, T is tritium and n is a neutron, helium having a kinetic energy of 2.05 MeV and tritium of 2.75 MeV, for a total of 4.8 MeV.

Thus, in a preferred embodiment, lithium 6 is used as the second target absorbing neutrons. Lithium 6 is preferably stored at a temperature above 600°C. Advantageously, about 30 ppm of carbon is mixed with the lithium to act as catalyst of the reaction of production of LiT, equivalent to lithium hydride where hydrogen is replaced with tritium. The tritium may then be separated from the lithium by adding sulphur dioxide at more than 50°C to form di-tritium T₂ and lithium dithionite Li₂S₂O₄.

Lithium dithionite can be regenerated to lithium and sulphur dioxide by electrolysis with carbonate-based electrolytes, as detailed in the following article: High-efficiency and high-power rechargeable lithium-sulfur dioxide batteries exploiting conventional carbonate-based electrolytes, Park, H., Lim, HD., Lim, HK. et al. Nat Commun 8, 14989 (2017). Https://doi.org/10.1038/ncomms14989

The compound LiT can be separated, for example by decanting, this compound being denser than lithium.

Preferably, a device is also provided for evacuating the helium generated in the third enclosure containing lithium.

Alternatively, the lithium 6 is kept liquid, at a temperature above 180°C but at a temperature below 600°C. Tritium does not react with gaseous lithium evaporating from the liquid lithium in bubbles, with helium. The residues of LiT are advantageously extracted from the lithium, for example by decanting, then the tritium is separated from the lithium by adding sulphur dioxide as described above.

### Production of hydrogen by the sulphur-iodine cycle

Advantageously, the heat released by the first and second nuclear reactions can be recovered in various heat exchangers or by circulation of a gas, a liquid or a solid within the second and third enclosures of the device according to the invention.

A chemical reactor may in particular be used for producing hydrogen by thermolysis using a sulphur-iodine cycle, as described in the presentation "Sulfur-Iodine Thermochemical Cycle", P. Pickard, Sandia National Labs, 17 May 2006.

An oxides-cerium cycle may also be used.

The heat produced by the fusion reactions may be utilized for supplying heat to the various endothermic reactions of the sulphur-iodine cycle.

### Water heating

The method may also be used for heating water, in liquid or gaseous form, using water as material absorbing the gamma radiation generated, or using it as moderating liquid or as liquid coolant.

### Production of olefins

The heat generated in the device according to the invention may advantageously be used for heating an alkane in the presence of catalysts such as platinum, palladium, rhodium, ruthenium, iridium, osmium or chromium, the alkane being in solid or liquid form as second target or protection against gamma rays, or in liquid or gaseous form as liquid coolant, or for absorbing the gamma rays. The alkane heated in the presence of the catalyst produces an alkene, butane for example being transformed to butene.

### Reduction of CO₂

Carbon dioxide can be converted to carbon monoxide, for example at 750°C, in a high-temperature electrolyser whose electrolyte is a conductor of O²⁻ ions. The electrolyte may be formed for example from a 150 µm thick layer of 10Sc1CeSZ (ZrO₂ doped with 10% of the molecules as Sc₂O₃ molecules and 1% of the molecules as CeOz molecules).

### Reduction of methane

Methane may advantageously be heated by the heat generated by the device according to the invention. Methane can be decomposed according to the following reaction:
CH₄ → C +2 Hz when methane is heated to a temperature above 1200°C.

Advantageously, the carbon generated may be deposited on diamonds to increase the size of the latter.

### Manufacture of cement

A fluid, such as gaseous nitrogen, may be used as cooling fluid generated by the device according to the invention to be heated to temperatures of the order of 1500°C. Clay and limestone may be heated for a second time by streams of heated nitrogen. Alternatively, a mixture of clay and limestone may be heated by absorption of the gamma radiation generated by the device according to the invention.

Cement may advantageously be manufactured from heated clay and limestone.

The second and third enclosures, and the enclosure containing the material for protection against gamma radiation, are preferably made of materials whose liquefaction temperature is above 3400°C, such as tungsten or carbon.

### Manufacture of iron

The device according to the invention may be used for heating ferric oxide for example as material absorbing gamma rays.

Ferric oxide can be reduced by carbon monoxide at 2000°C according to the following reaction, producing carbon dioxide:

Fe₂O₃ + 3 CO → 2 Fe + 3 CO₂

Alternatively, dihydrogen produced for example by the iodine-sulphur process described above may also be mixed with carbon monoxide so that reduction of ferric oxide takes place according to the reaction: Fe₂O₃ + CO + 2 H₂ → 2 Fe + COz + 2 HzO.

Iron is thus obtained starting from ferric oxide.

### Production of electricity

The energy generated by the device according to the invention may allow electricity to be produced, in particular by combining the device with a generator of electricity by oxidation-reduction.

The electricity may for example be produced by a zinc battery or by production of hydrogen, which is then consumed in a hydrogen cell.

A good yield in conversion of heat to electricity may allow sufficient electricity to be generated both for accelerating the ions of the first isotope and for providing consumable electrical energy.

### Production of electricity by zinc battery

According to an advantageous variant, electricity may be produced by regenerating zinc oxide to zinc, then using the zinc as an electrode in a zinc-air battery. The energy efficiency is limited on the one hand by the efficiency of the zinc-air battery, which, operating at 1.4 V for a theoretical voltage of 1.65 V, is of the order of 84%, and on the other hand by the efficiency of zinc regeneration. The latter is 100% by reduction with carbon or carbon monoxide, 100% by calcination of zinc oxide to zinc and oxygen at 1727°C, or 85% by hydrogenation of zinc oxide if the hydrogen is produced by the sulphur-iodine cycle.

If the second target comprises helium 3, reaction of the neutrons with helium 3 may produce on average 20.79 MeV per neutron. According to the inventor's calculations, the first nuclear reaction generating the neutrons may produce 3.3 MeV (for deuterium as first and second isotopes); acceleration of the ions requires 55 MeV for neutron creation for 76% of the ions.

The level of production of nuclear energy is then ((20.79+3.3)*0.76 +55)/55= 132%. If only 84% of the energy released and recovered is converted to electrical energy then 132% x 84% = 111% of the electrical energy serving for acceleration of the ions is recovered from the device, therefore allowing net creation of electricity of 11% of the energy necessary for acceleration of the ions.

The useful level of production of energy beyond the electrical energy necessary for acceleration of the ions can be improved by using other methods for converting thermal energy to electrical energy, such as production of electricity by a hydrogen cell, where the hydrogen is generated by a sulphur-iodine cycle; production of electricity by a zinc-air battery; regeneration of zinc by hydrogenation of zinc oxide or reduction of zinc oxide by carbon and carbon monoxide; or by using a liquid-zinc SOFC cell.

### Production of electricity by hydrogen cell

Electricity may also be generated by producing hydrogen, for example by the iodine-sulphur cycle, then using this hydrogen in a fuel cell. These fuel cells have an efficiency close to 60%. Advantageously, the fuel cell used may be a cell of the SOFC type, from which the heat released may be recovered for co-supply of heat to the device for production of hydrogen, giving an electricity/heat yield of 77%, or even 79.5% if a cycle for converting low heat is used with an efficiency of 10% or more, such as the Rankine cycle.

### With a sulphur-iodine cycle

The sulphur-iodine cycle makes it possible, by means of a large amount of heat, to produce hydrogen while evacuating a small amount of heat at 120°C for a heat energy loss estimated by the inventor at about 15%. The reaction I₂ + SOz + 2 H₂O → 2 HI +H₂SO₄ releases 15% of the heat required for the two endothermic reactions: 2 H₂SO₄→ 2 SO₂ + 2 H₂O + O₂ and 2 HI → I₂ + H₂.

The heat from the exothermic reaction of the sulphur-iodine cycle may be used advantageously in an organic Rankine cycle making it possible to convert 10% of this energy into electrical energy, thus raising the energy conversion efficiency to about 79%.

### With hydrogenation of zinc oxide

The heat produced by the device according to the invention can be used for regeneration of zinc starting from dihydrogen and zinc oxide produced by a Daniel cell, where part of the electricity produced may serve for accelerating the deuterium ions. The chemical reaction is:

ZnO + H₂ → Zn + H₂O

This endothermic reaction can take place at 1000°C in a mixture of 87% of dinitrogen and 13% of hydrogen, but advantageously without dinitrogen and preferably in the absence of water, as described in the following article: Lew, S., Sarofim, A.F., & Flytzani-Stephanopoulos, M. (1992). The reduction of zinc titanate and zinc oxide solids. Chemical Engineering Science, 47(6), 1421-1431.

The zinc oxide may be heated by the gamma radiation generated by the device according to the invention, extracting the zinc and the water in gaseous form.

### With reduction of zinc oxide by carbon and carbon monoxide

Alternatively, zinc can be regenerated by reduction with carbon at a temperature between 1200°C and 1400°C, or with carbon monoxide at a temperature between 900°C and 1000°C. These two reactions are endothermic and produce zinc and carbon dioxide, the carbon dioxide for example being regenerated to carbon and oxygen by high-temperature electrolysis.

### SOFC cell with liquid zinc

A liquid-zinc SOFC cell may be used, in which zinc, in particular zinc regenerated from zinc oxide, is raised to a high enough temperature to be in the liquid state. A solid electrolyte may be used, for example lanthanum strontium cobalt ferrite separated from the zinc by a layer of cerium oxide.

The zinc then constitutes the anode. Oxygen is supplied to the cathode, consisting for example of lanthanum strontium manganite, where it is ionized. The ionized oxygen rejoins the anode by passing through the solid electrolyte.

The use of a liquid-zinc SOFC cell makes it possible on the one hand to improve the efficiency of reduction in the oxidation-reduction of zinc relative to a conventional cell, and makes it possible on the other hand to employ the reaction of regeneration of zinc oxide to zinc and recycling of the hot oxygen released in this reaction. The operating temperature is preferably above 420°C, i.e. the melting point of zinc, and below 902°C, its vaporization temperature. Preferably, the operating temperature is 600°C.

The invention is not limited to the examples described above. In particular, the devices and the methods mentioned or illustrated may be combined differently, to form other variants that are not illustrated.

## Claims

1. Device for carrying out nuclear reactions, comprising:
- a source material comprising a first isotope, arranged in a first enclosure,
- an ionization system configured for ionizing the source material at least partially,
- an ion accelerator configured for accelerating ions derived from the source material towards a first target arranged in a second enclosure and comprising a second isotope, so as to allow a first nuclear reaction between the first isotope and the second isotope,
- a second target arranged either in the second enclosure or in a third enclosure separate from the second enclosure, so as to allow reaction of neutrons resulting from the first nuclear reaction with atomic nuclei of the second target,
the first isotope being a hydrogen isotope and the second isotope being a hydrogen isotope or a heavy isotope,
the first nuclear reaction being a reaction of spallation if the second isotope is a heavy isotope and a reaction of fusion if the second isotope is a hydrogen isotope.

2. Device according to the preceding claim, the ionization system comprising:
- a laser,
- an input waveguide configured for guiding the light emitted by the laser towards an optical input of the first enclosure, the optical input being configured to allow illumination of the source material by the emitted light.

3. Device according to Claim 1, the ionization system comprising an X-ray emission system arranged in the first enclosure so as to ionize the source material at least partially.

4. Device according to one of the preceding claims, the ion accelerator comprising a high-voltage generator, connected electrically to a first electrode and to a second electrode, the first and second electrodes being arranged in the second enclosure,
the generator and the first and second electrodes being configured to generate an electric field for accelerating ions from the source material towards the first target so as to cause fusion of the atomic nuclei of the ions from the source material with atomic nuclei of the first target.

5. Device according to one of the preceding claims, at least the first and/or second enclosure being surrounded by a wall comprising a material that absorbs gamma rays, such as tungsten or lead.

6. Device according to one of the preceding claims, the second target being arranged in the third enclosure, the third enclosure being arranged around the second enclosure.

7. Device according to one of the preceding claims, comprising a cooling circuit whose cooling fluid circulates at least partly in the walls of the second enclosure and/or in the walls of the third enclosure.

8. Device according to one of the preceding claims, the first isotope and the second isotope being selected from deuterium and tritium, only one of which may be tritium.

9. Device according to one of the preceding claims, the first isotope being deuterium in gaseous form, the deuterium circulating in a circuit comprising the first enclosure, the circuit being configured to cool the deuterium.

10. Device according to one of the preceding claims, the second target comprising, preferably consisting of, lithium 6.

11. Use of the device according to one of the preceding claims as a chemical reactor for heating a chemical product allowing a chemical reaction, endothermic in particular, with or without catalyst, said chemical product circulating preferably in the walls of the second enclosure and/or third enclosure to ensure cooling thereof, and/or in the second enclosure and/or in the third enclosure.
